# EUROPÄISCHE PATENTANMELDUNG

(11) **EP 0 967 240 A2**
(43) Veröffentlichungstag der Anmeldung: **29.12.1999**
(21) Anmeldenummer: 99111618.7
(22) Anmeldetag: 16.06.1999
(51) Int. Cl.: C08J 5/04

(54) **Mit Matten aus thermoplastischen Fasern verstärkter Thermoplast**

(30) Priorität: 23.06.1998 AT 107898
(71) Anmelder: Borealis AG, 2323 Schwechat-Mannswörth (AT)
(72) Erfinder: Zopf, Ernst, Ing., 4222 St. Georgen/Gusen (AT); Stadlbauer, Wolfram, Dipl.-Ing., 4040 Linz (AT); Blauhut, Wilfried, Dipl.-Ing., 4040 Linz (AT); Penz, Wolfgang, 4070 Fraham (AT)
(74) Vertreter: Kunz, Ekkehard, Dr.

(57) **Zusammenfassung**

Fasermassenverstärkter Thermoplast, der als Verstärkungsfasern thermoplastische Fasern, deren Schmelzpunkt mindestens 20 °C höher ist als der Schmelzpunkt des Matrix-Thermoplasten und deren Bruchdehnung im Zugversuch mindestens 10 % beträgt, allein oder gegebenenfalls in Kombination mit anderen Verstärkungsfasern enthält. Die fasermattenverstärkten Thermoplaste werden bevorzugt zur Herstellung von Preßteilen eingesetzt, die sich durch eine gute Faserverteilung auszeichnen.

## Beschreibung

Die Erfindung betrifft mit Matten aus thermoplastischen Fasern verstärkte Thermoplaste sowie daraus hergestellte Preßteile.

Faserverstärkte Thermoplastbahnen bzw. Thermoplastplatten, wie sie beispielsweise aus EP 300237 B oder EP 345463 B bekannt sind, sind hochwertige Konstruktionswerkstoffe, die üblicherweise in weiterer Folge in einem Heißpreßvorgang in beheizten Formpressen unter Druck zu den gewünschten Formteilen fertiggepreßt werden. Sie werden hauptsächlich im Maschinen- und Apparatebau, in der Auto- und Flugzeugindustrie sowie für Sport- und Haushaltsgeräte verwendet.

Insbesondere zur Herstellung von komplizierten Teilen, bei denen das Material beim Preßvorgang in der Preßform in kurzer Zeit große Fließstrecken zurücklegen muß, wobei nicht nur Matrixpolymer, sondern auch Fasern bis in die entferntesten Teile der Form transportiert werden müssen, wird die Faser bevorzugt in Form von Schnittfasermatten eingesetzt.

Als Verstärkungsfasern werden vor allem Glasfasern eingesetzt. Für Einsatzgebiete, in denen besonders hohe Steifigkeiten und geringes Gewicht gefordert werden, kommen beispielsweise auch Carbonfasern oder Aramidfasern in Frage. Durch die Faserverstärkung wird im Vergleich zu unverstärkten Thermoplasten vor allem eine höhere Festigkeit und eine höhere Steifigkeit (Erhöhung des E-Moduls) erreicht, wobei jedoch gleichzeitig auch eine Verminderung der Bruchdehnung eintritt. Diese reduzierte Bruchdehnung stellt jedoch für verschiedene Anwendungen, beispielsweise für stoß- oder steinschlaggefährdete Bauteile oder Verkleidungen in Kraftfahrzeugen, einen entscheidenden Nachteil dar.

Die Aufgabe der vorliegenden Erfindung bestand demnach vor allem im Auffinden von Werkstoffen, die diese Nachteile nicht aufweisen und insbesondere höhere Bruchdehnungen aufweisen, wobei jedoch trotzdem höhere Festigkeiten als bei unverstärkten Thermoplasten erzielt werden sollten.

Derartige Werkstoffe mit guten Festigkeiten und gleichzeitig hoher Bruchdehnung konnten erfindungsgemäß durch die Verwendung von Fasermatten aus Thermoplasten als Verstärkungsfasern für den Matrix-Thermoplasten erhalten werden.

Gegenstand der Erfindung ist demnach ein fasermattenverstärkter Thermoplast, bei dem als Verstärkungsfasern thermoplastische Fasern, deren Schmelzpunkt mindestens 20 °C, bevorzugt mindestens 40 °C höher ist als der Schmelzpunkt des Matrix-Thermoplasten und deren Bruchdehnung im Zugversuch (gemäß ISO 527) mindestens 10 % beträgt, allein oder gegebenenfalls in Kombination mit anderen Verstärkungsfasern verwendet werden. Die Bruchdehnung der Fasern beträgt bevorzugt mindestens 12 %.

Als Matrixpolymere sind alle thermoplastisch verarbeitbaren Polymere einsetzbar. Bevorzugt verwendet werden Polyolefine, wie z.B. Polyethylen oder Polypropylen, Polyamide (z.B. Polyamid 6), Polyester, beispielsweise Polybutylenterephthalat, wobei sowohl Homopolymere als auch Copolymere möglich sind. Besonders bevorzugt sind Polypropylen-homo- oder -copolymere. Der MFI (gemessen gemäß DIN 53735 bei 230 °C und 2,16 kg) liegt im Falle der Verwendung von Polypropylenen vorteilhafterweise bei mindestens 100 g/10 min, noch besser bei mindestens 250 g/10 min.

Für die Fasermatten können alle Thermoplaste, die sich zu Fasern verarbeiten lassen, wie z.B. Polyolefine, Polyamide, Polyester, Polycarbonate, Polyurethane, Polyphenylenoxid, Polyphenylensulfid, Polysulfone, Polypropylene, Polyamide, beispielsweise Polyamid 66 oder Polyamid 46, sowie Polyester, beispielsweise Polyethylenterephthalat. Die Faserlängen liegen üblicherweise bei 30 bis 150 mm, bevorzugt bei 50 bis 100 mm. Der Fasertiter liegt bevorzugt bei etwa 3 bis 150 dtex, besonders bevorzugt bei 17 bis 70 dtex. In Abhängigkeit vom verwendeten Polymer sowie von den Verfahrensbedingungen bei der Faserherstellung liegt die Bruchdehnung der Fasern zwischen 10 % und etwa 100 %, wobei die Obergrenze der Bruchdehnung bevorzugt bei maximal 60 % liegt.

Die Fasern können auf üblichen Vilesbildeanlagen, wie z.B. Karden mit Täflern oder pneumatischen Vliesbildnern zu Matten geformt werden. Das Mattengewicht liegt bevorzugt bei 100 bis 1000 g/m², besonders bevorzugt bei 300 bis 600 g/m².

Die Herstellung der erfindungsgemäßen fasermattenverstärkten Thermoplaste erfolgt beispielsweise durch Aufschmelzen des Matrixpolymers gegebenenfalls gemeinsam mit üblichen Additivs, wie z.B. Stabilisatoren, Pigmenten, Füllstoffen (z.B. Talkum, Glimmer, Kreide), Gleitmitteln, Nukleierungsmitteln, Flammschutzmitteln, etc. in einem Extruder, Extrusion durch eine oder mehrere Breitschlitzdüsen, Zusammenbringen in noch flüssigem Zustand mit einer oder mehreren Fasermatten, sowie anschließendes Verpressen und Abkühlen, vorzugsweise kontinuierlich zwischen den Bändern einer Doppelbandpresse. Die erhaltenen Verbundplatten lassen sich zu qualitativ hochwertigen Formteilen mit gleichmäßiger Faserverteilung und guter Oberflächenqualität verpressen.

Der Anteil an Verstärkungsfasem im fertigen Verbund liegt etwa im Bereich von 10 bis 40 Gew.%, bevorzugt von 20 bis 30 Gew.%. Es ist auch möglich, Matten mit verschiedenen Verstärkungsfasern zu verwenden. Entsprechend den speziellen Anforderungen an das Eigenschaftsprofil der fertigen Verbunde ist es gegebenenfalls auch möglich, die thermoplastischen Verstärkungsfasern in Kombination mit anderen Verstärkungsfasern, wie z.B. Glas-, Kohle- oder Aramidfasern zu verwenden.

Mit der vorliegenden Erfindung ist es nunmehr unvorhergesehenerweise gelungen, thermoplastische Fasern in thermoplastische Matrixpolymere einzuarbeiten und den entstandenen Verbund auch zu Fertigteilen zu verarbeiten, wobei die mechanischen Eigenschaften der Fasern so weit erhalten bleiben, daß Verbundbauteile mit gegenüber Glasfaserverstärkung nur moderat abgesenktem E-Modul, aber wesentlich erhöhter Bruchdehnung erhalten werden. Werte für die Bruchdehnung (gemessen gemäß ISO 527 im Zugversuch) liegen dabei beispielsweise im Fall von Polypropylen als Matrixpolymer im Bereich von etwa 40 %, die Zugfestigkeit (ISO 527) im Bereich von etwa 44 MPa und der Zug-E-Modul (ISO 527) im Bereich von etwa 2500 MPa. Die vergleichbaren Werte für glasfaserverstärktes Polypropylen liegen dabei im Bereich von etwa 1,8 % für die Bruchdehnung, von etwa 60 MPa für die Zug-Festigkeit und von etwa 4500 MPa für den Zug-E-Modul. Für ein unverstärktes Polypropylen liegen die entsprechenden Werte (Daplen BE 60, MFI (230 °C/2, 16 kg) 0,3, von PCD-Polymere) bei etwa 500 % für die Bruchdehnung, 40 MPa für die Zugfestigkeit und 1200 MPa für den E-Modul. Als zusätzlichen Vorteil zeigen die erfindungsgemäßen fasermattenverstärkten Thermoplaste eine geringere Dichte als glasfaserverstärkte Thermoplaste. Beispielsweise beträgt die Dichte bei 25 Gew.% Polyesterfaser in einer Polypropylenmatrix ca. 1 g/cm³, im Vergleich zu etwa 1,08 g/cm³ bei glasmattenverstärktem Polypropylen bei gleichem Faseranteil.

Die erfindungsgemäßen fasermattenverstärkten Thermoplaste werden bevorzugt zur Herstellung von Preßteilen verwendet, wobei die erwärmten Thermoplaste in entsprechenden Formpressen verpreßt werden. Ein weiterer Gegenstand der Erfindung sind demnach Preßteile, die aus erfindungsgemäßen fasermattenverstärkten Thermoplasten hergestellt werden. Dabei ist eine möglichst homogene Faserverteilung im Preßteil wesentlich, insbesondere dann, wenn das Material beim Preßvorgang größere Wege in der Form zurücklegen muß. Es besteht speziell in diesem Fall die Gefahr der Entmischung, d.h. die Gefahr, daß die Fasern nicht in gleichem Maß transportiert werden wie die aufgeschmolzene Matrix. Im Extremfall wird Matrix aus dem Einleger herausgepreßt und bildet allein die Fließfront. Im fertigen Preßteil (Preßling) entstehen dann besonders an den vom Einleger am weitest entfernten oder vom Fließvorgang schlecht zu erreichenden Bereichen des Preßteils (z.B. Rippen) Zonen mit verringertem Fasergehalt, im Extremfall gänzlich faserfreie Zonen. Dieses Problem tritt bei den erfindungsgemäßen mit Thermoplastfasermatten verstärkten Thermoplasten überraschenderweise nicht auf. Die erhaltenen Preßteile besitzen aufgrund des guten Fasertransportes beim Verpressen eine sehr gute und gleichmäßige Faserverteilung. Der Fasertransport ist dabei so gut, daß z.B. beim Verpressen eines einseitig in eine rechteckige ebene Form eingelegten aufgeheizten Einlegers, dessen Fließfront beim Pressen einen Weg zurückzulegen hat, der mindestens der Entfernung von der Formpresse bis zur ursprünglichen Kante des Einlegers entspricht, der Fasergehalt des entstandenen Preßlings, gemessen in Proben, die höchstens 3 Gew. % des Preßlings darstellen und eine Gesamtoberfläche von mindestens 85 cm² besitzen, mindestens 80 % des Fasergehaltes des Einlegers beträgt. Ein weiterer Gegenstand der Erfindung sind demnach Preßteile, die aus erfindungsgemäßen fasermattenverstärkten Thermoplasten hergestellt werden, deren Fasergehalt, gemessen in Proben, die höchstens 3 Gew. % des Preßlings darstellen und eine Gesamtoberfläche von mindestens 85 cm² besitzen, mindestens 80 % des Fasergehaltes des eingesetzten Thermoplasten beträgt.

### Beispiel 1: Herstellung der fasermattenverstärkten Thermoplaste

Eine Polyester-Stapelfaser aus Polyethylenterephthalat (17 dtex, 60 mm Schnittlänge, Schmelzpunkt 255 °C, Bruchdehnung gemäß ISO 527 : 50 %) wurde auf einer Nadelfilzanlage, bestehend aus Krempel, Täfler, Vor- und Hauptnadelmaschine sowie Wickler zu Fasermatten von 500 g/m² verarbeitet. Auf eine Matte wurde eine Schicht Polymer-Schmelze von 3000 g/m² aus Daplen PP XS 80 (MFI 2, 16/230 250 g/10 mm, Schmelzpunkt 169 °C) mittels einer Breitschlitzdüse aufextrudiert und eine zweite Fasermatte (500 g/m²) oben aufgelegt. Das System Matte - Schmelze - Matte wurde mit einer Geschwindigkeit von 1 m/min einer Doppelbandpresse zugeführt und in dieser mit einem Druck von 150 N/cm² bei 200 °C und einer Verweilzeit im Durchlauf von 6 min verpreßt. Erhalten wurde ein Polyestermatten-verstärktes PP von 4 mm Dicke, einem Fasergehalt von 25 Gew.%, einer Dichte von 0,99 g/cm³, einer Bruchdehnung im Zugversuch von 40 %, einer Zugfestigkeit von 44 MPa und einem Zug-E-Modul von 2500 MPa.

### Beispiel 2: Herstellung eines Preßteiles

3 Zuschnitte des gemäß Beispiel 1 erhaltenen Halbzeugs mit den Abmessungen von je 240 x 166 x 3,7 mm wurden in einem Kontaktofen auf 200 °C erwärmt, übereinander gestapelt, einseitig in die Kavität eines plattenförmigen Tauchkantenwerkzeugs mit den Abmessungen 590 mm x 250 mm eingelegt und mit einer Preßkraft von 2000 kN verpreßt. Beim Verpressen füllte das vorliegende Gomposit (PP-Matrix und Polyesterfaser-Verstärkung) die Kavität vollflächig aus.

Die verpreßte Platte war 2 mm dick und wurde in Streifen von 15 mm x 250 mm geschnitten. Bei der Bestimmung der Faserverteilung zeigten alle der 37,5 cm² großen Streifen (entsprechend einer Gesamtoberfläche von 85,6 cm²) einen Fasergehalt von über 20 Gew. %, entsprechend über 80 % des ursprünglich eingesetzten Fasergehaltes von 25 Gew. %.

## Patentansprüche

1. Fasermattenverstärkter Thermoplast, dadurch gekennzeichnet, daß er als Verstärkungsfasern thermoplastische Fasern, deren Schmelzpunkt mindestens 20 °C höher ist als der Schmelzpunkt des Matrix-Thermoplasten und deren Bruchdehnung im Zugversuch mindestens 10 % beträgt, allein oder gegebenenfalls in Kombination mit anderen Verstärkungsfasern enthält.

2. Fasermattenverstärkter Thermoplast gemäß Anspruch 1, dadurch gekennzeichnet, daß die Bruchdehnung der Fasern mindestens 12 % beträgt.

3. Fasermattenverstärkter Thermoplast gemäß Anspruch 1 oder 2, dadurch gekennzeichnet, daß der Matrixthermoplast Polypropylen (PP) ist.

4. Fasermattenverstärkter Thermoplast gemäß Anspruch 3 dadurch gekennzeichnet, daß der Schmelzindex (MFI 230/2, 16) des PP mindestens 100 g/10 min beträgt.

5. Fasermattenverstärkter Thermoplast gemäß einem der Ansprüche 1 bis 4, dadurch gekennzeichnet, daß die thermoplastische Verstärkungsfaser eine Polyesterfaser ist.

6. Fasermattenverstärkter Thermoplast gemäß einem der Ansprüche 1 bis 4, dadurch gekennzeichnet, daß die thermoplastische Faser eine Polyamid-Faser ist.

7. Fasermattenverstärkter Thermoplast gemäß einem der Ansprüche 1 bis 6, dadurch gekennzeichnet, daß der Fasertiter 3 bis 150 dtex beträgt.

8. Fasermattenverstärkter Thermoplast gemäß Anspruch 7, dadurch gekennzeichnet, daß der Fasertiter 17 bis 70 dtex beträgt.

9. Verwendung von fasermattenverstärkten Thermoplasten gemäß einem der Ansprüche 1 bis 8 zur Herstellung von Preßteilen.

10. Preßteile die aus fasermattenverstärkten Thermoplasten gemäß einem der Ansprüche 1 bis 8 hergestellt werden.

11. Preßteile gemäß Anspruch 10, dadurch gekennzeichnet, daß ihr Fasergehalt, gemessen in Proben, die höchstens 3 Gew. % des Preßlings darstellen und eine Gesamtoberfläche von mindestens 85 cm² besitzen, mindestens 80 % des Fasergehaltes des eingesetzten Thermoplasten beträgt.
